# EUROPEAN PATENT SPECIFICATION

(11) **EP 3 417 989 B1**
(45) Date of publication and mention of the grant of the patent: **27.12.2023**
(21) Application number: 17461553.4
(22) Date of filing: 21.06.2017
(51) Int. Cl.: B23P 6/00, B23P 6/04, F01D 5/00, F01D 5/28

(54) **METHOD OF REPAIRING A TURBOMACHINE COMPONENT**
VERFAHREN ZUM REPARIEREN EINER TURBINENKOMPONENTE
PROCÉDÉ DE RÉPARATION D'UN COMPOSANT DE TURBOMACHINE

(43) Date of publication of application: 26.12.2018
(73) Proprietor: General Electric Technology GmbH, 5400 Baden (CH)
(72) Inventor: SITKIEWICZ, Wojciech Filip, 02-256 Warszawa (PL); CHUC-KARMANSKI, Artur Marcin, 02-256 Warszawa (PL); GACA, Magdalena, 02-256 Warszawa (PL); GAIK, Adam, 02-256 Warszawa (PL); KLIMCZUK, Piotr Artur, 02-256 Warszawa (PL); KOWALCZYK, Michal, 02-256 Warszawa (PL); LISKIEWICZ, Robert, 02-256 Warszawa (PL); PAKUSZEWSKI, Mariusz, 02-256 Warszawa (PL); WOJCIECHOWSKI, Marek, 02-256 Warszawa (PL)
(74) Representative: Novagraaf Group

(56) References cited:
- US-A1- 2013 323 533
- US-A1- 2015 030 460
- US-A1- 2017 167 263
- K J Hemker ET AL: "Thermal Expansion Measurements on Coating Materials by Digital Image Correlation Thermal Expansion Measurements on Coating Materials by Digital Image Correlation", , 3 February 2015 (2015-02-03), XP055767884, Retrieved from the Internet: URL:https://www.researchgate.net/figure/Me asured-and-reference-CTE-results-for-Rene- N5_fig5_268414772 [retrieved on 2021-01-22]
- R RAJENDRAN ET AL: "Dynamic elastic properties of aero-engine metallic isotropic materials", JOURNAL OF MATERIALS: DESIGN AND APPLICATIONS - PART L, vol. 227, no. 3, 17 July 2012 (2012-07-17) , pages 243-249, XP055767879, GB ISSN: 1464-4207, DOI: 10.1177/1464420712454071
- P. N. QUESTED ET AL: "Measurement and estimation of thermophysical properties of nickel based superalloys", MATERIALS SCIENCE AND TECHNOLOGY, vol. 25, no. 2, 1 February 2009 (2009-02-01), pages 154-162, XP055767899, GB ISSN: 0267-0836, DOI: 10.1179/174328408X361454

## Description

### FIELD OF THE INVENTION

The subject matter disclosed herein relates to manufacturing and repair of components. The present invention relates to methods of manufacturing and/or repairing components to manage material stress.

### BACKGROUND OF THE INVENTION

During operation, turbomachine components, such as turbomachine blades and nozzles, are subjected to high temperatures, pressures and/or stresses over extended periods. In many cases, particular portions of these components can be subject to differential stresses due to their geometry and location relative to a working fluid (e.g., gas or steam). For example, a blade platform or tip, or a nozzle sidewall, can be subject to different warmup and cool down rates than the airfoil of that same blade or nozzle. This differential thermal inertia can cause tensile stress at or near the platform and/or tip (or sidewall). These tensile stresses may contribute to cracking or other material fatigue, and ultimately can require repair and/or maintenance.
US 2013/0323533 proposes repairing superalloy components with coupons. The application cites a variety of nickel-based superalloys of whjch the superalloy component may be comprised. It is taught that a single crystal coupon is disposed in a void of the superalloy component which may either be already present or created through an excavation step. The superalloy component may comprise René N5.

### BRIEF DESCRIPTION OF THE INVENTION

The herein claimed invention relates to the subject matter set forth in the claims.

### BRIEF DESCRIPTION OF THE DRAWINGS

The features of this invention will be more readily understood from the following detailed description of the various aspects of the invention taken in conjunction with the accompanying drawings that depict various embodiments of the invention, in which:
FIG. 1 is a schematic depiction of a plurality of turbomachine components.
FIG. 2 is a schematic depiction of the plurality of turbomachine components of FIG. 1, further illustrating a process of identifying a location of potential or actual structural weakness in the component(s) according to various embodiments of the invention.
FIG. 3 is a schematic close-up depiction of a portion of one of the turbomachine components from FIG. 2, further illustrating a process according to various embodiments of the invention.
FIG. 4 is a schematic close-up depiction of the portion of the turbomachine component from FIG. 3, further illustrating a process according to various embodiments of the invention.
FIG. 5 is a flow diagram illustrating processes in forming a composite turbomachine component according to various embodiments of the invention.
FIG. 6 shows a block diagram of an additive manufacturing process including a non-transitory computer readable storage medium storing code representative of one or more portions of the composite component of FIG. 4 according to examples of the disclosure.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

The subject matter disclosed herein relates to manufacturing and/or repair of a composite turbomachine component. More specifically, the subject matter of the herein claimed invention relates to methods of composite components with materials of distinct thermal expansion coefficients.

In various embodiments, the composite turbomachine component has a body and an insert filling a slot in the body, where the location of the slot is determined based upon an expected or actual amount of material fatigue in that portion of the body. The insert can be welded to the body at the slot, but in some cases, the insert could also be brazed to the body at the slot. In various embodiments, the body of the turbomachine component is formed of steel or an alloy, such as at least one nickel-chromium superalloy, at least one cobalt-based superalloy or at least one nickel-based superalloy (e.g., Inconel-738, Inconel-939, Udimet 500 and Udimet 700, from Special Metals Corp., New Hartford, NY; or GTD-111, GTD-222, GTD-241, GTD-741 or GTD-141 (from the General Electric Company, Boston, MA); or FSX-414). In various embodiments, the insert can include a material having a distinct thermal expansion coefficient from the material of the body, e.g., approximately 0.9 to approximately 1.1 times the thermal expansion coefficient of the body. In some cases, the insert can include a nickel-chromium-molybdenum alloy (e.g., Nimonic 263, from the Special Metals Corp or Haynes 230, from Haynes International, Inc., Kokomo, IN), and in some particular cases, the insert can consist substantially entirely (e.g., given nominal other materials) of a nickel-chromium-molybdenum alloy. The location of the slot (and insert) is determined based upon a model (e.g., a finite element analysis model) of the turbomachine component, or an observed wear on the turbomachine component (e.g., via human operator inspection, or with an optical inspection system, florescent inspection system, infra-red inspection system). The slot (and insert) may be located within a portion of the platform, in the case of a turbomachine blade, or a sidewall, in the case of a turbomachine nozzle. In some other cases, the slot (and insert) can be located proximate the tip of the airfoil, e.g., in a "Z-notch" region of the blade. The composite turbomachine component may be stronger than conventional turbomachine components formed of a uniform or substantially uniform material composition.

In some particular cases, the slot is machined from the body, e.g., by cutting, sanding or otherwise abraded the location in the body for the insert. After the insert is placed in the slot, it may be welded, brazed or otherwise heat-treated to bond with the body and fill the slot. After bonding the insert to the body at the slot, the surface of the insert and the body may be machined, e.g., grinded, sanded, or otherwise planarized to form a surface profile consistent with the original design of the blade.

In various embodiments, the composite component can include a refurbished component, e.g., where the body is an original part having gone through field use and the insert is a replacement portion of the component. In other cases, the composite component can include two original parts (either having gone through field use, or not) joined at an interface, and in other cases, the composite component can include two replacement parts joined at an interface.

In the following description, reference is made to the accompanying drawings that form a part thereof, and in which is shown by way of illustration specific embodiments in which the present teachings may be practiced. These embodiments are described in sufficient detail to enable those skilled in the art to practice the present teachings and it is to be understood that other embodiments may be utilized and that changes may be made within the scope of the claims without departing from the scope of the present teachings. The following description is, therefore, merely illustrative.

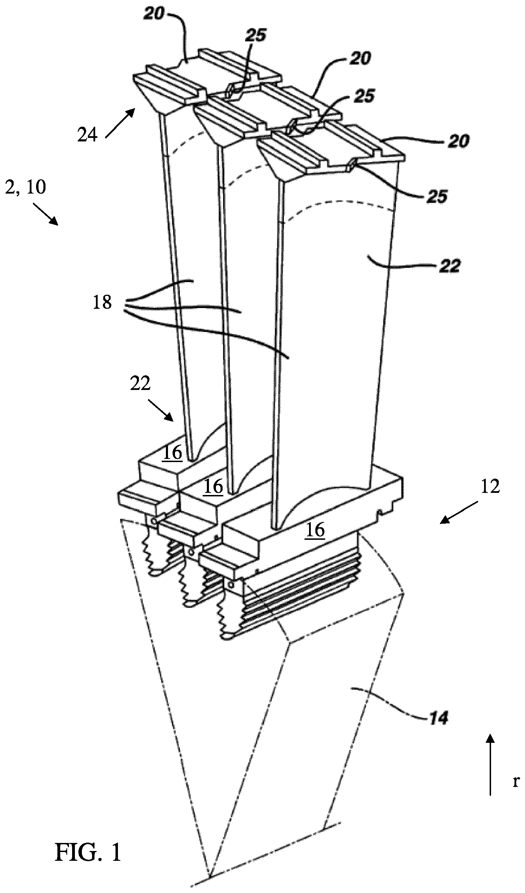

FIG. 1 shows an example set of turbomachine components 2. In some cases, turbomachine component 2 can include a gas turbomachine blade 10. However, as discussed herein, turbomachine component 2 can include turbine nozzles, guide vanes, etc., subject to high thermal stresses during operation. As shown, in some cases, a plurality of turbomachine components 2 (e.g., blades 10) can be coupled with a turbomachine disc 14 (rotor disc), forming part of a turbine stage 12. Each blade 10 can include a platform 16, an airfoil 18 connected with and radially extending from platform 16, and a shroud 20 connected airfoil 18. Platform 16 is coupled with base 22 of airfoil 18, and shroud 20 is coupled with tip 24 of airfoil 18. Adjacent shrouds 20 in a stage 12 can include complementary interfaces, also referred to as a Z-notch 25, for linking the blades 10 in the same stage 12.

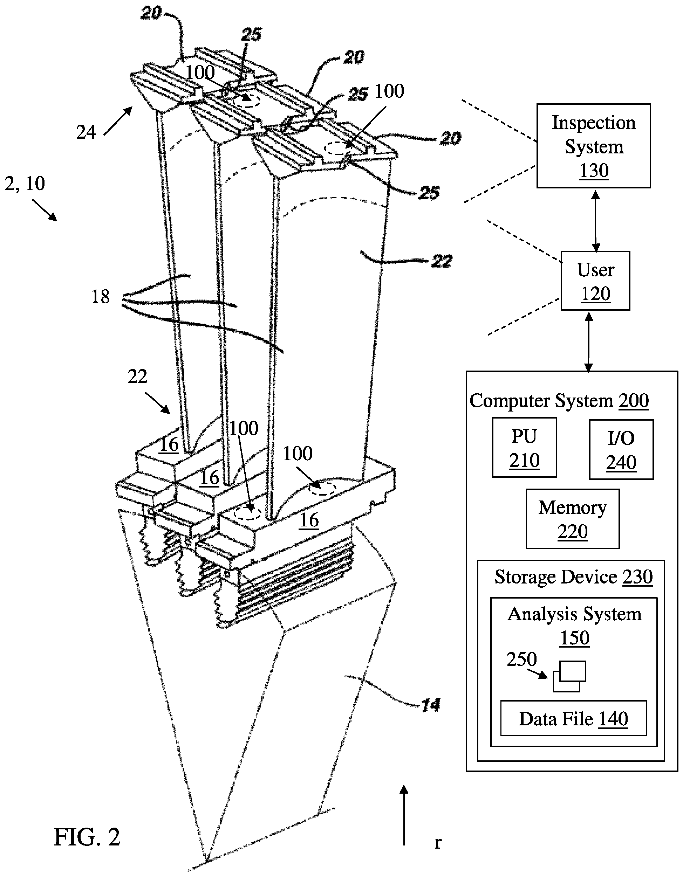

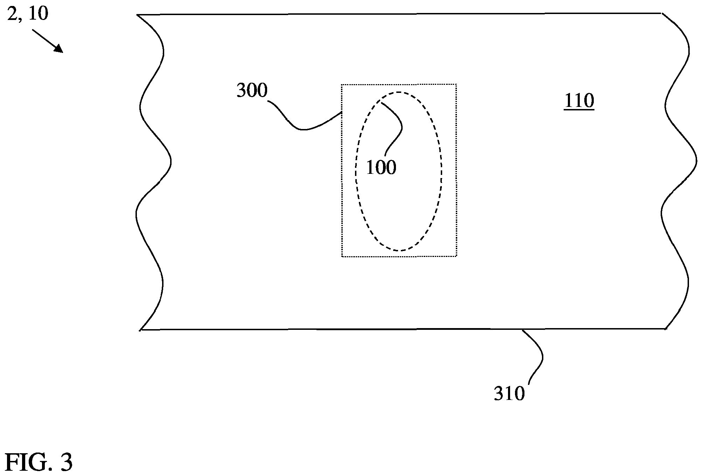

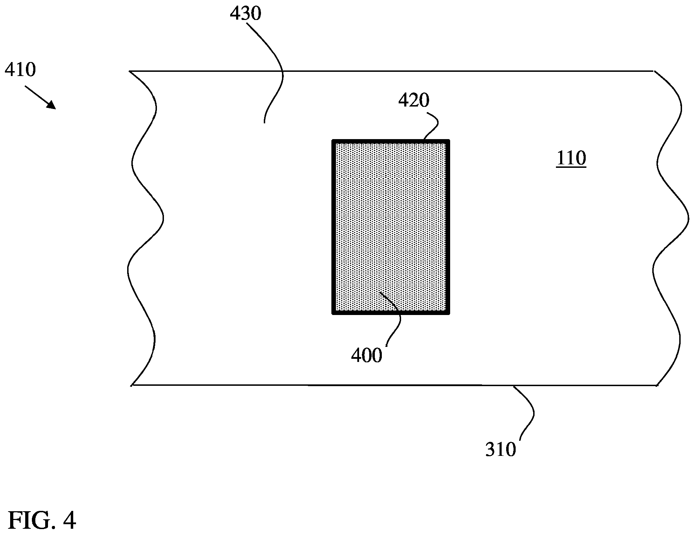

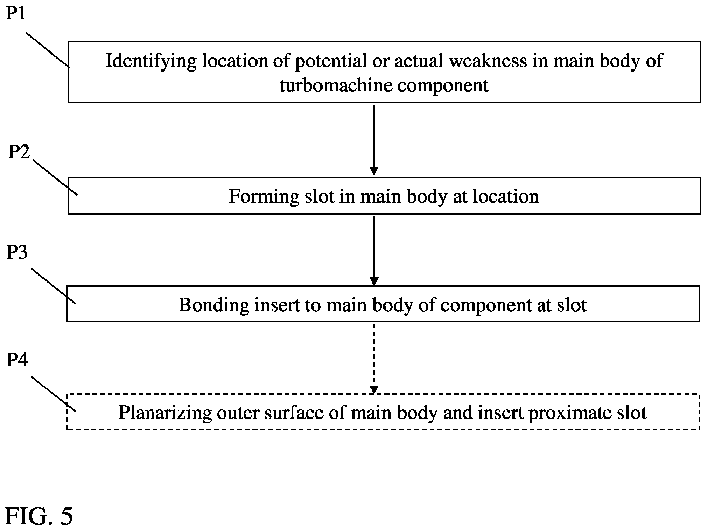

FIG. 2 illustrates a first process in a method of forming a composite turbomachine component according to various embodiments of the invention. FIGS. 3 and 4 show close-up schematic depictions of a portion of a turbomachine component 2 (such as blade 10, a nozzle, a guide vane, or other turbomachine component), undergoing additional processes in forming a composite turbomachine component 410 (FIG. 4) according to embodiments of the invention. FIG. 5 is a flow diagram illustrating processes shown and described with reference to FIGS. 2-4.

With reference to FIGS. 2-5, according to various embodiments, a method can include:
Process P1: identifying a location 100 of potential or actual structural weakness in a body 110 of turbomachine component 2. Body 110 includes a first material having a first thermal expansion coefficient. That is, in some cases, body 110 of component 2 is composed entirely, or approximately (e.g., within 1-3 percent) entirely of, a first material, which has a first thermal expansion coefficient. In some cases, the first material includes steel. It is understood that the first material or second material may include impurities to the extent acceptable in conventional turbomachine components. In some particular cases, the first material can include a steel or an alloy such as at least one nickel-chromium superalloy, at least one cobalt-based superalloy or at least one nickel-based superalloy (e.g., Inconel-738, Inconel-939, Udimet 500 and Udimet 700, from Special Metals Corp., New Hartford, NY; or GTD-111, GTD-222, GTD-241, GTD-741 or GTD-141 (from the General Electric Company, Boston, MA); or FSX-414). In various embodiments, the thermal expansion coefficient of the first material (at an example temperature of approximately 815 degrees Celsius (~1500 degrees Fahrenheit)) is approximately 8 x 10⁻⁶ in/(in F) (14.5 x 10⁻⁶ cm/(cm °C). The location 100 of potential or actual structural weakness in body 110 can be identified according to various embodiments.

According to the herein claimed invention, identifying location(s) 100 includes performing a finite element analysis on a data file 140 representing turbomachine component 2. Data file 140 can include a computer-aided design (CAD) file or other data model representing turbomachine component 2. In some cases, data file 140 can be used to form turbomachine component 2 or another similar component. In various embodiments, a turbomachine component analysis system (analysis system) 150 can be used to analyze data file 140 to identify location(s) 100 in turbomachine component 2 of potential or actual structural weakness. In particular cases, turbomachine analysis system 150 can be configured to identify locations(s) 100 of potential structural weakness in turbomachine component 2, e.g., based upon a modeled response of turbomachine component 2 to expected operating conditions such as particular temperature ranges, pressure ranges, fatigue cycles, warmup/cooldown cycles, etc. In various embodiments, turbomachine component analysis system 150 can be stored or otherwise deployed by a conventional computer system 200 having a processor (PU) 210, memory 220, storage device 230 and an input/output (I/O) device 240. Turbomachine component analysis system 150 can include one or more logic engines (or modules) 250 for executing commands to analyze data file 140 according to various embodiments described herein. In particular cases, data file 140 can include a three-dimensional (3D) model of the component 2, and analysis system 150 can include a software program for analyzing low-cycle fatigue and/or crack propagation in the 3D model, such as conventional simulation software (e.g., ANSYS Mechanical, from ANSYS, Inc., Canonsburg, PA).

According to various embodiments, where turbomachine component 2 includes a blade 10, location 100 may be within platform 16 or tip shroud 20, proximate airfoil 18. FIG. 2 illustrates several locations 100, within platform 16 and tip shroud 20, which shown in phantom to demonstrate that one or more locations 100 can be identified according to various embodiments. In some particular cases, location 100 can be proximate the aft (downstream) side of platform 16, for example, at the suction side of airfoil 18.

Process P2: after identifying location 100, includes forming a slot 300 (FIG. 3) in location 100 of body 110, where slot 300 extends at least partially through a wall 310 of turbomachine component 2. In some cases, slot 300 can be formed by cutting turbomachine component 2 proximate location 100. In various embodiments, as shown in FIG. 3, slot 300 can be formed in an area substantially surrounding location 100 (e.g., at border of location 100 or slightly outside the border of location 100). In some embodiments, turbomachine component 2 can include an original equipment component not yet deployed in operation. In some particular cases, forming slot 300 in body 110 includes cutting or otherwise machining turbomachine component 2, e.g., with a saw or other machining tool. In other cases, turbomachine component 2 can be formed as an original component, including slot 300, via conventional molding, casting, etc., or via additive manufacturing techniques further described herein.

Process P3: after forming slot 300 in component 2, bonding an insert 400 (FIG. 4) to body 100 at the slot 300 to form a composite component 410. In various embodiments, insert 400 includes a second material (distinct from first material of body 100), having a second thermal expansion coefficient. The second thermal expansion coefficient can differ from the first thermal expansion coefficient by approximately +/- 10 percent (e.g., approximately between 0.9-1.1 times the first thermal expansion coefficient of body 100 material). In some cases, the second material consists of a nickel-chromium-molybdenum alloy (e.g., Nimonic 263, from the Special Metals Corp or Haynes 230, from Haynes International, Inc., Kokomo, IN). According to various embodiments, insert 400 is welded to body 110 at slot 300 according to conventional welding techniques. In some other cases, insert 400 is brazed to body 110 at slot 300 according to conventional welding techniques. In either case, insert 400 is bonded to body 110 with a weld or braze joint 420. In some cases, welding can be used to bond insert 400 to body 110 at slot, e.g., at a current of approximately 40-50 Amperes, with an arc voltage of approximately 10-15 volts. As noted herein, after bonding to body 110, insert 400 is configured to reduce the potential or actual structural weakness in body 110.

Process P4 (optional post-process): in some cases, after bonding insert 400 to body 110 of component 2, an additional process can include planarizing an outer surface 430 of body 110 and insert 400 proximate slot 300. In various embodiments, planarizing can include conventional machining processes such as sanding, grinding, polishing or otherwise smoothing outer surface 430 of body 110 and insert 400 proximate slot 300.

As shown in FIG. 4, processes P1-P3 (and optionally process P4), can be used to form composite turbomachine component 410 which is configured to reduce potential or actual structural weakness in a turbomachine component 2. That is, according to various embodiments, turbomachine component 410 is designed to include insert 400 at a strategically placed location 100 in order to reduce actual or potential structural weakness in the base turbomachine component 2.

One or more portions of composite component 410 (FIG. 4) may be formed in a number of ways. In one embodiment, as noted herein, at least a portion of composite component 410 may be formed by conventional manufacturing techniques, such as molding, casting, machining (e.g., cutting), etc. In one example, however, additive manufacturing is particularly suited for manufacturing at least a portion of composite component 410 (FIG. 4), e.g., turbomachine component 2 and/or insert 400. As used herein, additive manufacturing (AM) may include any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of metal (e.g., alloy) or other material such as plastics and/or polymers, much of which is cut away and discarded, the only material used in additive manufacturing is what is required to shape the part. Additive manufacturing processes may include but are not limited to: 3D printing, rapid prototyping (RP), direct digital manufacturing (DDM), selective laser melting (SLM) and direct metal laser melting (DMLM). In the current setting, DMLM can be beneficial.

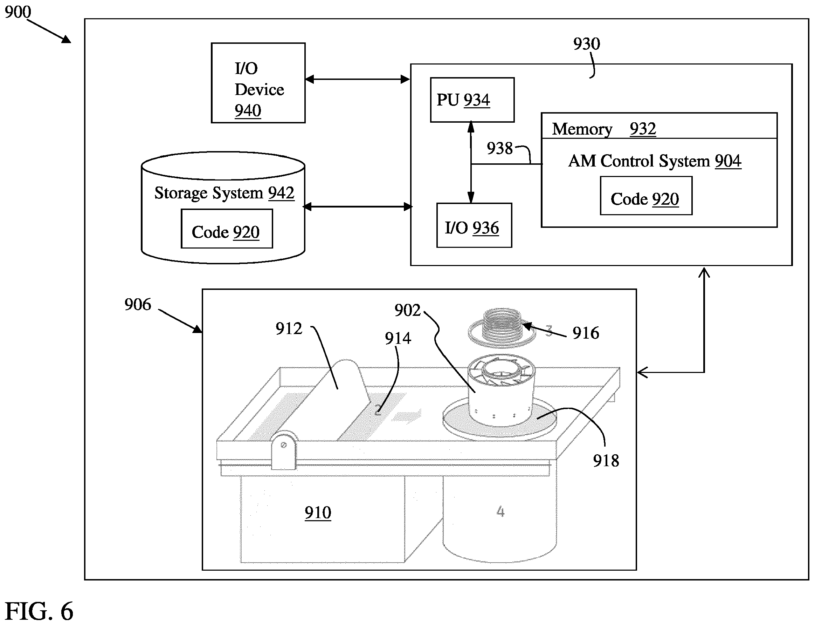

To illustrate an example of an additive manufacturing process, FIG. 6 shows a schematic/block view of an illustrative computerized additive manufacturing system 900 for generating an object 902. In this example, system 900 is arranged for DMLM. It is understood that the general teachings of the disclosure are equally applicable to other forms of additive manufacturing. Object 902 is illustrated as a double walled turbomachine component; however, it is understood that the additive manufacturing process can be readily adapted to manufacture at least a portion of composite component 410 (FIG. 4), e.g., turbomachine component 2 and/or insert 400. AM system 900 generally includes a computerized additive manufacturing (AM) control system 904 and an AM printer 906. AM system 900, as will be described, executes code 920 that includes a set of computer-executable instructions defining at least a portion of composite component 410 (FIG. 4) to physically generate the object using AM printer 906. Each AM process may use different raw materials in the form of, for example, fine-grain powder, liquid (e.g., polymers), sheet, etc., a stock of which may be held in a chamber 910 of AM printer 906. In the instant case, at least a portion of composite component 410 (FIG. 4) may be made of metal(s), alloy(s), plastic/polymers or similar materials. As illustrated, an applicator 912 may create a thin layer of raw material 914 spread out as the blank canvas from which each successive slice of the final object will be created. In other cases, applicator 912 may directly apply or print the next layer onto a previous layer as defined by code 920, e.g., where the material is a polymer. In the example shown, a laser or electron beam 916 fuses particles for each slice, as defined by code 920, but this may not be necessary where a quick setting liquid plastic/polymer is employed. Various parts of AM printer 906 may move to accommodate the addition of each new layer, e.g., a build platform 918 may lower and/or chamber 910 and/or applicator 912 may rise after each layer.

AM control system 904 is shown implemented on computer 930 as computer program code. To this extent, computer 930 is shown including a memory 932, a processor 934, an input/output (I/O) interface 936, and a bus 938. Further, computer 930 is shown in communication with an external I/O device/resource 940 and a storage system 942. In general, processor 934 executes computer program code, such as AM control system 904, that is stored in memory 932 and/or storage system 942 under instructions from code 920 representative of at least a portion of composite component 410 (FIG. 4), described herein. While executing computer program code, processor 934 can read and/or write data to/from memory 932, storage system 942, I/O device 940 and/or AM printer 906. Bus 938 provides a communication link between each of the components in computer 930, and I/O device 940 can comprise any device that enables a user to interact with computer 940 (e.g., keyboard, pointing device, display, etc.). Computer 930 is only representative of various possible combinations of hardware and software. For example, processor 934 may comprise a single processing unit, or be distributed across one or more processing units in one or more locations, e.g., on a client and server. Similarly, memory 932 and/or storage system 942 may reside at one or more physical locations. Memory 932 and/or storage system 942 can comprise any combination of various types of non-transitory computer readable storage medium including magnetic media, optical media, random access memory (RAM), read only memory (ROM), etc. Computer 930 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 932, storage system 942, etc.) storing code 920 representative of at least a portion of composite component 410 (FIG. 4). As noted, code 920 includes a set of computer-executable instructions defining outer electrode that can be used to physically generate the tip, upon execution of the code by system 900. For example, code 920 may include a precisely defined 3D model of outer electrode and can be generated from any of a large variety of well-known computer aided design (CAD) software systems such as AutoCAD^{®}, TurboCAD^{®}, DesignCAD 3D Max, etc. In this regard, code 920 can take any now known or later developed file format. For example, code 920 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 920 may be translated between different formats, converted into a set of data signals and transmitted, received as a set of data signals and converted to code, stored, etc., as necessary. Code 920 may be an input to system 900 and may come from a part designer, an intellectual property (IP) provider, a design company, the operator or owner of system 900, or from other sources. In any event, AM control system 904 executes code 920, dividing at least a portion of composite component 410 (FIG. 4) into a series of thin slices that it assembles using AM printer 906 in successive layers of liquid, powder, sheet or other material. In the DMI,M example, each layer is melted to the exact geometry defined by code 920 and fused to the preceding layer. Subsequently, the portion(s) of composite component 410 (FIG. 4) may be exposed to any variety of finishing processes, e.g., minor machining, sealing, polishing, assembly to other part of the igniter tip, etc.

This written description uses examples to disclose the invention, including the best mode, and also to enable any person skilled in the art to practice the invention. The scope of the herein claimed invention is defined by the appended claims.

## Claims

1. A method comprising:
identifying a location (100) of potential or actual structural weakness in a body (110) of a turbomachine component (2), the body including a first material having a first thermal expansion coefficient;
forming a slot (300) in the location of the body (110), the slot extending at least partially through a wall of the turbomachine component; and
bonding an insert (400) to the body at the slot to form a composite component (410), the insert including a second material having a second thermal expansion coefficient, the second thermal expansion coefficient differing from the first thermal expansion coefficient by up to approximately ten percent, the second material consisting of a nickel-chrome-molybdenum alloy, wherein after the bonding the insert is configured to reduce the potential or actual structural weakness in the body,
**characterized in that** the identifying includes performing a finite element analysis on a data file representing the turbomachine component to determine the location of the potential or actual structural weakness.

2. The method of claim 1, wherein the first material includes steel.

3. The method of claim 2, wherein the steel is at least one nickel-chromium superalloy, at least one cobalt-based superalloy or at least one nickel-based superalloy.

4. The method of claim 1, wherein the bonding includes welding or brazing the insert (400) to the body (110) at the slot (300).

5. The method of claim 4, wherein the bonding is performed at a current of approximately 40-50 Amperes with an arc voltage of approximately 10-15 volts.

6. The method of claim 1, further comprising planarizing an outer surface (430) of the body (110) and the insert (400) proximate the slot (300) after the bonding of the insert to the body.

7. The method of claim 1, wherein the turbomachine component (2) includes a turbomachine blade (10) having: an airfoil (18) with a base and a tip; a platform (16) coupled with the base (22) of the airfoil and a tip shroud (20) coupled with the tip (24) of the airfoil, and wherein the location is proximate an aft side of the platform at a suction side of the airfoil.

8. The method of claim 1, wherein the forming of the slot (300) in the body (110) includes cutting the turbomachine component.

9. The method of claim 1, wherein the turbomachine component (2) includes a turbomachine blade (10) having: an airfoil (18) with a base and a tip; a platform (16) coupled with the base (22) of the airfoil and a tip shroud (20) coupled with the tip (24) of the airfoil, and wherein the location is within the platform or the tip shroud proximate the airfoil.

## Patentansprüche

1. Verfahren, umfassend:
Identifizieren einer Stelle (100) von potenzieller oder tatsächlicher Strukturschwäche in einem Körper (110) einer Turbomaschinenkomponente (2), wobei der Körper ein erstes Material einschließt, das einen ersten Wärmeausdehnungskoeffizienten aufweist;
Ausbilden eines Schlitzes (300) in der Stelle des Körpers (110), wobei sich der Schlitz mindestens teilweise durch eine Wand der Turbomaschine erstreckt; und
Verbinden eines Einsatzes (400) mit dem Körper an dem Schlitz, um eine Verbundkomponente (410) auszubilden, wobei der Einsatz ein zweites Material einschließt, das einen zweiten Wärmeausdehnungskoeffizienten aufweist, wobei sich der zweite Wärmeausdehnungskoeffizient von dem ersten Wärmeausdehnungskoeffizienten um bis zu etwa zehn Prozent unterscheidet, wobei das zweite Material aus einer Nickel-Chrom-Molybdän-Legierung besteht, wobei nach dem Verbinden der Einsatz konfiguriert ist, um die potenzielle oder tatsächliche Strukturschwäche des Körpers zu reduzieren,
**dadurch gekennzeichnet, dass** das Identifizieren ein Durchführen einer Finite-Elemente-Methode an einer Datendatei einschließt, die die Turbomaschinenkomponente darstellt, um die Stelle der potenziellen oder tatsächlichen Strukturschwäche zu bestimmen.

2. Verfahren nach Anspruch 1, wobei das erste Material Stahl einschließt.

3. Verfahren nach Anspruch 2, wobei der Stahl mindestens eine Nickel-Chrom-Superlegierung, mindestens eine kobaltbasierte Superlegierung oder mindestens eine nickelbasierte Superlegierung ist.

4. Verfahren nach Anspruch 1, wobei das Verbinden ein Schweißen oder ein Hartlöten des Einsatzes (400) an den Körper (110) an dem Schlitz (300) einschließt.

5. Verfahren nach Anspruch 4, wobei das Verbinden bei einem Strom von etwa 40-50 Ampere mit einer Lichtbogenspannung von etwa 10-15 Volt durchgeführt wird.

6. Verfahren nach Anspruch 1, ferner umfassend ein Planarisieren einer Außenoberfläche (430) des Körpers (110) und des Einsatzes (400) nahe dem Schlitz (300) nach dem Verbinden des Einsatzes mit dem Körper.

7. Verfahren nach Anspruch 1, wobei die Turbomaschinenkomponente (2) eine Turbomaschinenschaufel (10) einschließt, die aufweist: ein Schaufelblatt (18) mit einer Basis und einer Spitze; eine Plattform (16), die mit der Basis (22) des Schaufelblatts gekoppelt ist, und eine Spitzenummantelung (20), die mit der Spitze (24) des Schaufelblatts gekoppelt ist, und wobei die Stelle nahe einer hinteren Seite der Plattform an einer Saugseite des Schaufelblatts ist.

8. Verfahren nach Anspruch 1, wobei das Ausbilden des Schlitzes (300) in dem Körper (110) ein Schneiden der Turbomaschinenkomponente einschließt.

9. Verfahren nach Anspruch 1, wobei die Turbomaschinenkomponente (2) eine Turbomaschinenschaufel (10) einschließt, die aufweist: ein Schaufelblatt (18) mit einer Basis und einer Spitze; eine Plattform (16), die mit der Basis (22) des Schaufelblatts gekoppelt ist, und eine Spitzenummantelung (20), die mit der Spitze (24) des Schaufelblatts gekoppelt ist, und wobei die Stelle innerhalb der Plattform oder der Spitzenummantelung nahe dem Schaufelblatt ist.

## Revendications

1. Procédé comprenant :
l'identification d'un emplacement (100) de faiblesse structurelle potentielle ou réelle dans un corps (110) d'un composant de turbomachine (2), le corps comportant un premier matériau ayant un premier coefficient de dilatation thermique ;
la formation d'une fente (300) dans l'emplacement du corps (110), la fente s'étendant au moins partiellement à travers une paroi du composant de turbomachine ; et
la liaison d'un insert (400) au corps au niveau de la fente pour former un composant composite (410), l'insert comportant un second matériau ayant un second coefficient de dilatation thermique, le second coefficient de dilatation thermique différant du premier coefficient de dilatation thermique jusqu'à environ dix pour cent, le second matériau étant constitué d'un alliage nickel-chrome-molybdène, dans lequel, après la liaison, l'insert est conçu pour réduire la faiblesse structurelle potentielle ou réelle dans le corps,
**caractérisé en ce que** l'identification comporte la mise en oeuvre d'une analyse par élément fini sur un fichier de données représentant le composant de turbomachine pour déterminer l'emplacement de la faiblesse structurelle potentielle ou réelle.

2. Procédé selon la revendication 1, dans lequel le premier matériau comporte de l'acier.

3. Procédé selon la revendication 2, dans lequel l'acier est au moins un superalliage nickel-chrome, au moins un superalliage à base de cobalt ou au moins un superalliage à base de nickel.

4. Procédé selon la revendication 1, dans lequel la liaison comporte le soudage ou le brasage de l'insert (400) au corps (110) au niveau de la fente (300).

5. Procédé selon la revendication 4, dans lequel la liaison est effectuée avec un courant d'environ 40-50 ampères avec une tension d'arc d'environ 10-15 volts.

6. Procédé selon la revendication 1, comprenant en outre la planarisation d'une surface extérieure (430) du corps (110) et de l'insert (400) à proximité de la fente (300) après le collage de l'insert au corps.

7. Procédé selon la revendication 1, dans lequel le composant de turbomachine (2) comporte une aube de turbomachine (10) ayant : un profil aérodynamique (18) avec une base et une pointe ; une plate-forme (16) accouplée à la base (22) du profil aérodynamique et un carénage de pointe (20) accouplé à la pointe (24) du profil aérodynamique, et dans lequel l'emplacement est à proximité d'un côté arrière de la plate-forme au niveau d'un côté aspiration du profil aérodynamique.

8. Procédé selon la revendication 1, dans lequel la formation de la fente (300) dans le corps (110) comporte la découpe du composant de turbomachine.

9. Procédé selon la revendication 1, dans lequel le composant de turbomachine (2) comporte une aube de turbomachine (10) ayant : un profil aérodynamique (18) avec une base et une pointe ; une plate-forme (16) accouplée à la base (22) du profil aérodynamique et un carénage de pointe (20) accouplé à la pointe (24) du profil aérodynamique, et dans lequel l'emplacement est à l'intérieur de la plate-forme ou du carénage de pointe à proximité du profil aérodynamique.
